# EUROPÄISCHE PATENTSCHRIFT

(11) **EP 1 077 003 B1**
(45) Veröffentlichungstag und Bekanntmachung des Hinweises auf die Patenterteilung: **20.07.2005**
(21) Anmeldenummer: 99930991.7
(22) Anmeldetag: 03.05.1999
(51) Int. Cl.: H04Q 3/00

(54) **VERFAHREN ZUR STEUERUNG VON TELEKOMMUNIKATIONSDIENSTEN**
METHOD FOR CONTROLLING TELECOMMUNICATION SERVICES
PROCEDE POUR COMMANDER DES SERVICES DE TELECOMMUNICATION

(30) Priorität: 08.05.1998 DE 19820685; 08.05.1998 EP 98108450
(43) Veröffentlichungstag der Anmeldung: 21.02.2001
(73) Patentinhaber: SIEMENS AKTIENGESELLSCHAFT, 80333 München (DE)
(72) Erfinder: REBER, Ulrich, D-82152 Planegg (DE); DAVUTOGLU, Can, D-81673 München (DE)
(86) Internationale Anmeldenummer: PCT/DE1999/001302
(87) Internationale Veröffentlichungsnummer: WO 1999/059348

(56) Entgegenhaltungen:
- WO-A-97/07637
- US-A- 5 430 719
- US-A- 5 517 562
- BRAY M: "IMPACT OF NEW SERVICES ON SCP PERFORMANCE" INTERNATIONAL CONFERENCE ON COMMUNICATIONS, INCLUDING SUPERCOMM TECHNICAL SESSIONS. ATLANTA, APR. 15 - 19, 1990, Bd. 1, 15. April 1990 (1990-04-15), Seiten 241-247, XP000147409 INSTITUTE OF ELECTRICAL AND ELECTRONICS ENGINEERS
- MASAHIKO FUJINAGA ET AL: "IMPLEMENTING IN FUNCTIONAL ENTITIES ON TOP OF DISTRIBUTED OPERATING SYSTEM" PROCEEDINGS OF THE INTERNATIONAL SWITCHING SYMPOSIUM, YOKOHAMA, OCT. 25 - 30, 1992, Bd. 1, Nr. SYMP. 14, 25. Oktober 1992 (1992-10-25), Seiten 268-272, XP000337657 INSTITUTE OF ELECTRONICS;INFORMATION AND COMMUNICATION ENGINEERS

## Beschreibung

Die Erfindung betrifft ein Verfahren zur Steuerung von Telekommunikationsdiensten in Telekommunikationsnetzen.

Bei Telekommunikationsdiensten, oft auch Mehrwertdienste genannt, handelt es sich um zusätzlich zu der reinen Datenübertragung angebotene Leistungen, beispielsweise verschiedene Arten der Anrufum- oder -weiterleitung, Vergebührungsmodelle wie Zahlung per Kreditkarte, Gebührenübernahme, Premium Call oder VPN (Virtuelles Privates Netz).

Dabei wird eine Technik verwendet, die in der Serie von Standards Q.1200 ff. der ITU beschrieben ist, das sogenannte Intelligente Netz IN.
Es handelt sich um eine Architektur, welche über ein vorhandenes Fest- oder Mobilfunknetz gelegt werden kann.

Eine typische, beispielweise in US-A-5 430 719 beschriebene IN Architektur beinhaltet dabei folgende Komponenten:
- Service Switching Point, SSP
- Service Control Point, SCP
- Service Management System, SMS
- Service Creation Environment, SCE.

Der SSP oder Dienste-Vermittlungs-Netzelement, bildet ein Teil des Vermittlungsknotens und die Schnittstelle zu der SCP basierten IN Call Control. Er erkennt, wenn zusätzliche IN Funktionalitäten erforderlich sind und ruft bei Bedarf den SCP auf, über ein Signalisierungsnetz, welches üblicherweise ein spezielles Protokoll (INAP, IN Application Protocol) auf dem Common Channel Signaling System No. 7 verwendet.

Der SCP ist eine zentrale Verarbeitungseinheit, welche die sogenannten Dienstelogiken für Telekommunikationsdienste und -features beinhaltet. Nach Empfang einer Anfrage eines SSP (s. o.) ermittelt der SCP den angeforderten Dienst und lenkt den Aufruf zur passenden Anwendung. Der Aufruf wird bearbeitet und der SSP wird über die nächsten durchzuführenden Schritte unterrichtet, z. B. eine Verbindung aufzubauen zu einer bestimmten Nummer, Abbruch der Verbindung, oder Vergebührung erwirken.

Das SMS bietet Unterstützung für die Anwendungsprogramme des SCP: z. B. das Einrichten von neuen Telekommunikationsdiensten, das An- und Abmelden von Teilnehmern und vieles andere mehr.
Das SMS arbeitet eng mit den anderen Komponenten des IN zusammen.

Für den Entwurf neuer Telekommunikationsdienste steht das SCE zur Verfügung. Seine wichtigste Aufgabe ist es, Werkzeuge für den schnellen Entwurf und das Testen von neuen Diensten und Features bereit zu stellen. Dazu steht eine Bibliothek von Bausteinen (den sogenannten Service Independend Building Blocks, SIB) zur Verfügung.

Bislang hat jeder Telekommunikationsnetzbetreiber ein eigenes IN-System, welches er in seinem eigenen Netz einsetzte. Durch eine zunehmende Aufsplittung des Telekommunikationsmarktes entstehen in letzter Zeit jedoch immer weitere kleine Anbieter, beispielsweise in den großen Städten, die sogenannten ,City Carrier'. Auch für diese sind die Telekommunikationsdienste ein wichtiger Faktor, um den Nutzern Mehrwert zu bieten.
Für diese kleinen Betreiber ist jedoch die Barriere sehr hoch, da die klassischen IN Komponenten in Anschaffung und Betrieb teuer sind. Zudem muß für den Betrieb hochqualifiziertes Personal zur Verfügung stehen.

Eine Lösung, um dieses zu umgehen ist, die IN Ressourcen, also im wesentlichen SCP, SMS und SCE aufzuteilen, ist das sogenannte ,Shared IN', welches es technisch ermöglicht, Ressourcen eines einzigen IN Systems für mehrere Netzbetreiber nutzbar zu machen.

Aufgabe der Erfindung ist es, in einem Shared IN System jedem Kunden eines Netzbetreibers genau diejenigen Telekommunikationsdienste seines eigenen Netzbetreibers zur Verfügung zu stellen.

Diese Aufgabe wird gelöst durch ein Verfahren gemäß Patentanspruch 1.

Erfindungswesentlich ist dabei eine zusätzliche Überprüfung, die von dem SCP durchgeführt wird, bevor ein Dienstaufruf weiter bearbeitet wird.
Dabei wird berücksichtigt, daß sowohl die Telekommunikationsdienste, die ein Steuerungs-Netzelement (SCP) verwaltet, als auch die Dienste-Vermittlungs-Netzelemente (SSP) jeweils bestimmten Netzbetreibern zugeordnet sind. Ein Teilnehmer, der das Telekommunikationsnetz eines Betreibers verwendet, soll auch nur auf die Telekommunikationsdienste dieses Netzbetreibers zugreifen können.
Gehört der aufgerufene Dienst dem selben Netzbetreiber wie das Dienste-Vermittlungs-Netzelement, von dem dieser Dienstaufruf kam, so wird die Bearbeitung durch den SCP wie bisher durchgeführt. Ist dies aber nicht der Fall, so wird der Dienstaufruf nicht durchgeführt.

Durch die erfindungsgemäße Überprüfung wird das Shared IN System sicherer gegen Störungen und Fehlbedienungen durch die in diesem Gebiet technisch nicht so versierten Netzbetreiber. Weiterhin wird sichergestellt, daß die Vergebührung der Telekommunikationsdienste (durch die sogenannten AMA Tickets, Automatic Message Accounting) korrekt durchgeführt werden kann.

Vorteilhafte Ausgestaltungen und Weiterbildungen sind in den Unteransprüchen angegeben.

Es gibt mehrere Möglichkeiten, wie das Steuerungs-Nerzelement die Zugehörigkeit der Dienste-Vermittlungs-Netzelemente zu einem Netzbetreiber feststellen kann.
Zum einen kann eine Betreiber-Kennung mit jedem Dienstaufruf als zusätzlicher Parameter von dem Dienste-Vermittlungs-Netzelement mitgeliefert werden.
Das Steuerungs-Netzelement kann diese Information aber auch speichern, etwa in Form von Listen, in denen Dienste-Vermittlungs-Netzelement zugehörigen Netzbetreiber zugeordnet sind.

Bei manchen Telekommunikationsdienstenist es notwendig, daß zuvor eine Initialisierungsnachricht an das Dienste-Vermittlungs-Netzelement gesendet wird. Dies betrifft beispielsweise das sogenannte ,Televoting', also das reine Zählen der Verbindungsaufbauversuche zu einer Nummer. Bei einem konventionellen IN System wird die Initialisierungsnachricht (Activate Service Filtering) an alle Dienste-Vermittlungs-Netzelemente in dem Telekommunikationsnetz gesendet.
Bei einem Shared IN System nun ist es vorteilhaft, wenn nur diejenigen Dienste-Vermittlungs-Netzelemente, welche dem diesen Dienst anbietenden Netzbetreiber gehören, auch diese Initialisierungsnachricht erhalten.
Das Steuerungs-Netzelement sucht sich erfindungsgemäß aus einer gespeicherten Liste die dem Netzbetreiber zugeordneten Dienste-Vermittlungs-Netzelemente heraus, und versendet die Initialisierungsnachricht nur an genau diese Netzelemente.

Eine weitere Anwendungsmöglichkeit ist das sogenannte ,Call Gapping', ein Dienst, der es ermöglicht, die Anzahl der von dem Dienste-Vermittlungs-Netzelement durchzustellenden Dienste-Aufrufe festzulegen.
Dieses wird oftmals verwendet, um eine zu hohe Last zum Beispiel des Steuerungs-Netzelementes SCP zu reduzieren. Die Berechnungen, die dabei zentral angestellt werden, müssen allerdings in einem Shared IN System ebenfalls betreiberspezifisch durchgeführt werden. Weiterhin wird auch hier wiederum die Initialisierungsnachricht (CALLGAP, Q.1214) nur an die Dienste-Vermittlungs-Netzelemente des betroffenen Netzbetreibers versendet.

Im folgenden wird die Erfindung anhand von Ausführungsbeispielen erläutert. Dabei zeigen
- Figur 1: den grundlegenden Aufbau eines Shared IN Systems,
- Figur 2: einen IN Diensteaufruf in einem klassischen IN System,
- Figur 3: einen IN Diensteaufruf in einem Shared IN System, wobei der nicht zugelassene Dienstaufruf an den zu dem Dienst gehörigen Netzbetreiber geleitet wird,
- Figur 4: einen IN Diensteaufruf in einem Shared IN System, wobei der zu lösende Problemfall auftritt,
- Figur 5: die erfindungsgemäße Behandlung eines Aufrufes eines Telekommunikationsdienstes eines Netzbetreibers A von einem Teilnehmer des Netzbetreibers B, und
- Figur 6: das erfindungsgemäße Vorgehen, wenn eine Initialisierungsnachricht an das Dienste-Vermittlungs-Netzelement SSP vom Steuerungs-Netzelement SCP notwendig ist, also z. B. für Televoting oder Call Gapping.

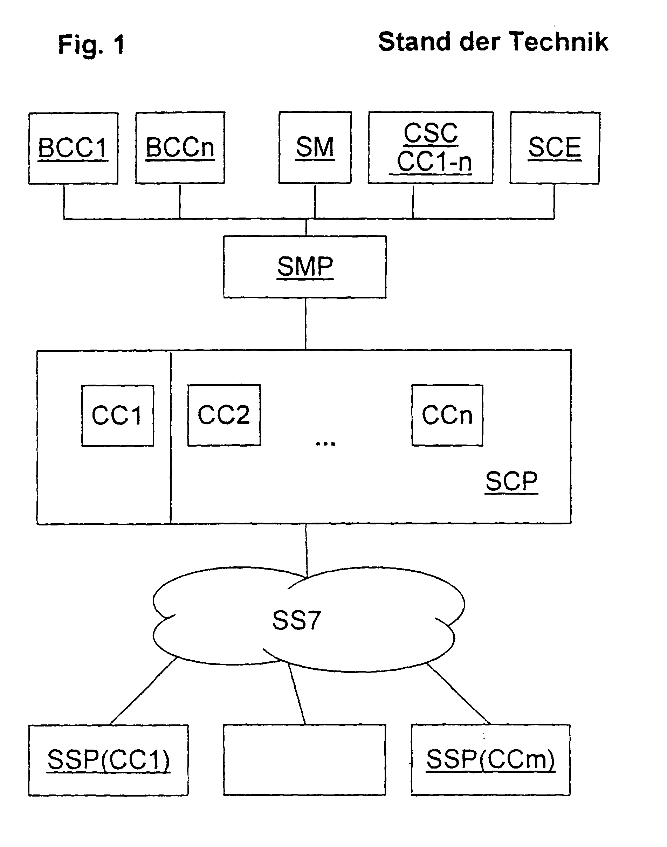

Figur 1 beschreibt ein beispielhaftes Shared IN System in seinem Aufbau mit den wesentlichen Elementen. Unten sind die Dienste-Vermittlungs-Netzelemente SSP dargestellt, die unterschiedlichen Netzanbietern (sogenannte City Carrier CC1 bis CCm) zugeordnet sind. Die Verbindung ist, wie bereits in der Einleitung dargestellt, über ein Kommunikationsnetz SS7 (also beispielsweise Zentralkanalsignalisierungssystem Nr. 7) untereinander und mit dem Steuerungs-Netzelement SCP verbunden. Das Steuerungs-Netzelement selber wird von einem IN Operator betreut (in der Figur nicht dargestellt) und enthält die Komponenten für die einzelnen Netzbetreiber ,City Carrier' CCl, CC2, CCn, welche an diese vermietet sein können.

Zugehörig zu dem Steuerungs-Netzelement werden von dem IN Operator weitere Netzelemente betreut (eine Beschreibung hierzu ist teilweise bereits in der Einleitung erfolgt):
- der Service Management Point, SMP, auch Dienstbediensystem genannt, da hier Funktionen für das Dienstmanagement zur Verfügung gestellt werden
- Vergebührung, Billing und Customer Care, BCC1, BCCn
- Service Management, SM, für die Verwaltung der Dienstprogramme und der zugehörigen Ressourcen
- Service Creation Environment, SCE, für die Entwicklung neuer IN Dienste und Dienstbausteine
- Betreuungs-Zentren der Netzbetreiber, Customer Support Center, CSC1-n

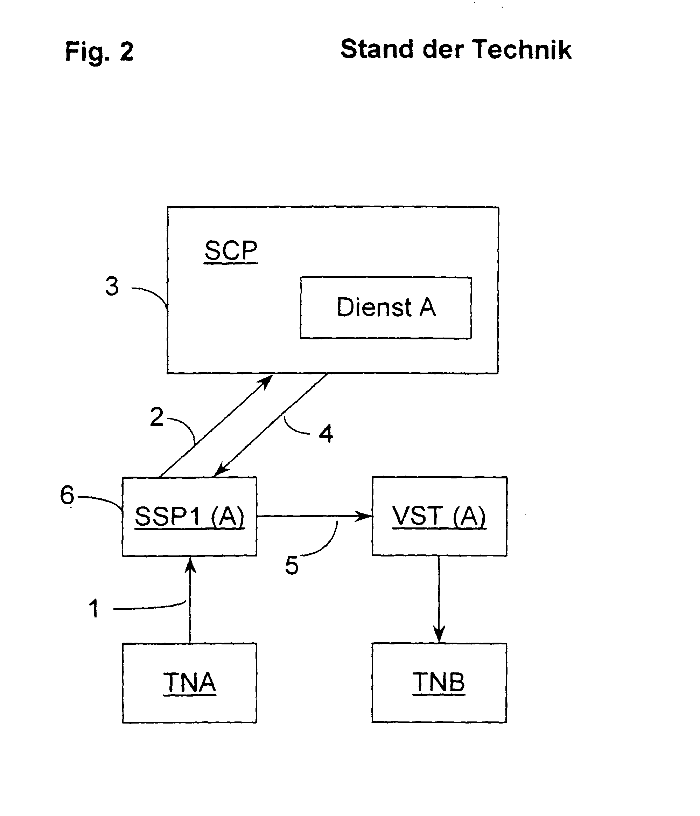

In Figur 2 ist ein IN Dienstaufruf dargestellt, so wie er in einem klassischen IN System, d. h. alle Komponenten gehören zum selben Netzbetreiber A, durchgeführt wird.
Ein Teilnehmer wählt eine (Dienste-)Nummer 1, zum Beispiel die 0147-1234. Dieser Aufruf wird vom Dienste-Vermittlungs-Netzelement SSP1(A). Dieser Dienst gehört ebenfalls dem Netzbetreiber A. Das Dienste-Vermittlungs-Netzelement leitet die Anfrage an das Steuerungs-Netzelement SCP 2, welches mit Hilfe der Dienstprogramme Dienst A ermittelt, welches die nächsten Ausführungsschritte sind, 3.
Im beschriebenen Fall wird eine Rufnummernumsetzung und das Dienste-Vermittlungsnetzelement wird angewiesen 4, eine Verbindung zu einem Teilnehmer TNB, 5, (über die Vermittlungsstelle, an der Teilnehmer B angeschlossen ist, VST(B)). Zuletzt wird die Vergebührung durchgeführt, d. h. ein sogenanntes AMA-Ticket wird von dem Dienste-Vermittlungs-Netzelement geschrieben, 6.
Da alle Komponenten und der Dienst zu einem Netzbetreiber gehören, ist eine weitere Überprüfung nicht notwendig.

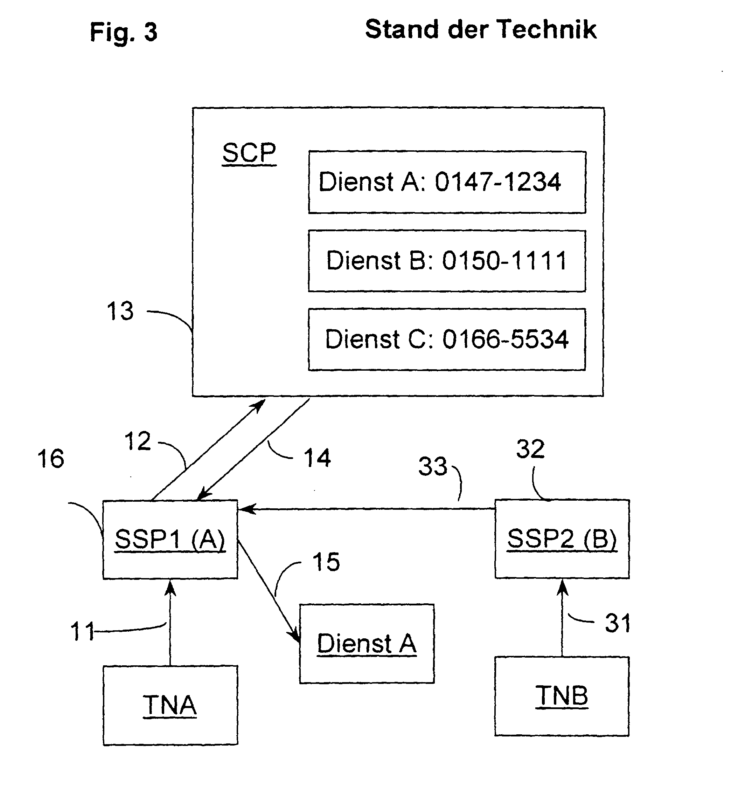

Figur 3 zeigt ein Shared IN System, welches von mehreren Netzbetreibern A, B, C verwendet wird.

Diese Netzbetreiber haben jeweils Dienste: Dienst A für Netzbetreiber A, Dienst B für Netzbetreiber B und Dienst C für Netzbetreiber C.
Ruft ein Teilnehmer TNA über eine Dienste-Vermittlungs-Netzelement SSP1(A) des Netzbetreibers A einen Dienst des Netzbetreibers A auf, so wird dieser ebenso behandelt, wie bei einem Diensteaufruf in einem klassischen IN System. Dieses ist in Figur 2 bereits beschrieben worden. Der Dienst A wird dabei wieder mit der Rufnummer 0147-1234 aufgerufen, die Bezugszeichen 11 bis 16 entsprechen den jeweiligen Bezugszeichen 1 bis 6 aus Figur 2. Die Nummernumsetzung erfolgt auf den Dienst A.
Im kritischen Fall, in Figur 3 auf der rechten Seite dargestellt, ruft ein Teilnehmer B über ein Dienste-Vermittlungs-Netzelement SSP2(B) des Netzbetreibers B ebenfalls den Dienst A: 0147-1234 des Netzbetreibers A auf, 31. Die Dienstenummern werden zentral von dem IN an die Operatoren der Netzbetreiber vergeben.
Nach dem Erkennen der nicht zugehörigen Dienstenummer ist es ein korrektes Verhalten des Dienste-Vermittlungs-Netzelementes SSP2(B), den Diensteaufruf nicht an den SCP weiterzuleiten.
Der Dienstaufruf wird statt dessen an ein dem Netzbetreiber A gehörenden Dienste-Vermittlungs-Netzelement SSP1(A) weitergeleitet 32.
Es ist dann sowohl möglich, daß der Dienst über den Netzbetreiber A angeboten und verrechnet ober abgewiesen wird.

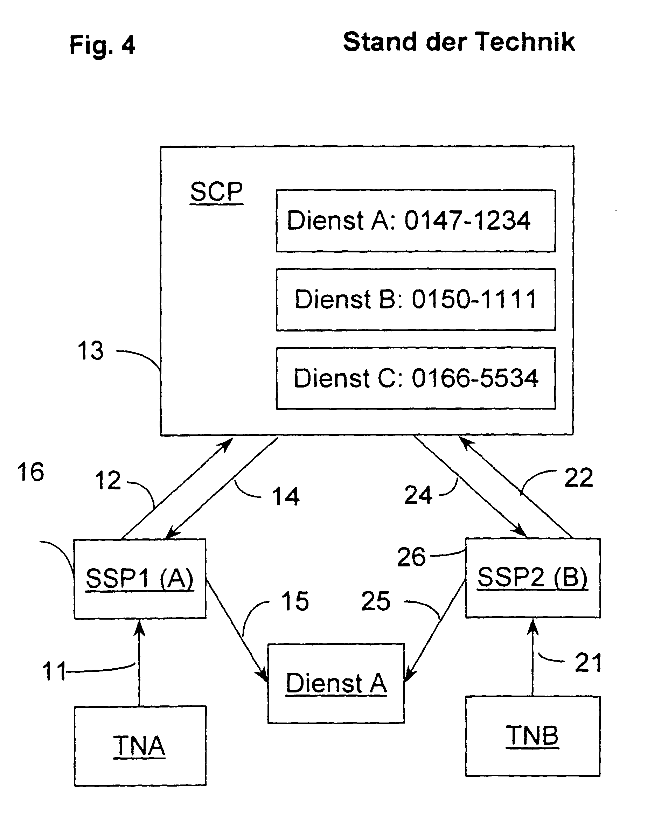

In Figur 4 zeigt das gleiche Shared IN System wie Figur 3, welches von mehreren Netzbetreibern A, B, C verwendet wird. Diese Netzbetreiber haben jeweils Dienste: Dienst A für Netzbetreiber A, Dienst B für Netzbetreiber B und Dienst C für Netzbetreiber C.
Auf der linken Seite ist wiederum der herkömmliche Dienstaufruf, wie in Figur 2 und Figur 3 bereits beschrieben, dargestellt.

Auf der rechten Seite ist ein Diensteaufruf 21 eines Dienstes von Netzbetreiber A: 0147-1234 von dem Teilnehmer TNB über ein Dienste-Vermittlungs-Netzelement SSP2(B) des Netzbetreibers B zu sehen. Das Dienste-Vermittlungs-Netzelement verhält sich nun aber im Gegensatz zu Figur 3 fehlerhaft und behandelt den Aufruf genauso wie einen Aufruf eines eigenen Dienstes, indem er eine Anfrage an den SCP startet, 22.
Der SCP nimmt diese Dienstaufforderung an und behandelt, sie genauso wie diejenige, 12, von SSP1(A) des Netzbetreibers A, 13. Eine Rückmeldung mit der Rufnummernumsetzung, 24, wird an den SSP2(B) gemeldet und eine Verbindung mit dem Dienst A, 25, aufgebaut.
Besonders kritisch ist dabei die Vergebührung, 26. Das AMA-Ticket wird dabei von dem Dienste-Vermittlungselement SSP2(B) des Netzbetreibers B geschrieben, dem der Dienst A garnicht gehört. Das Ergebnis ist daher, der konkurrierende Netzbetreiber zieht (z. B. von dem Teilnehmer TNB) Geld ein für eine Leistung, das ihm eigentlich garnicht zusteht.

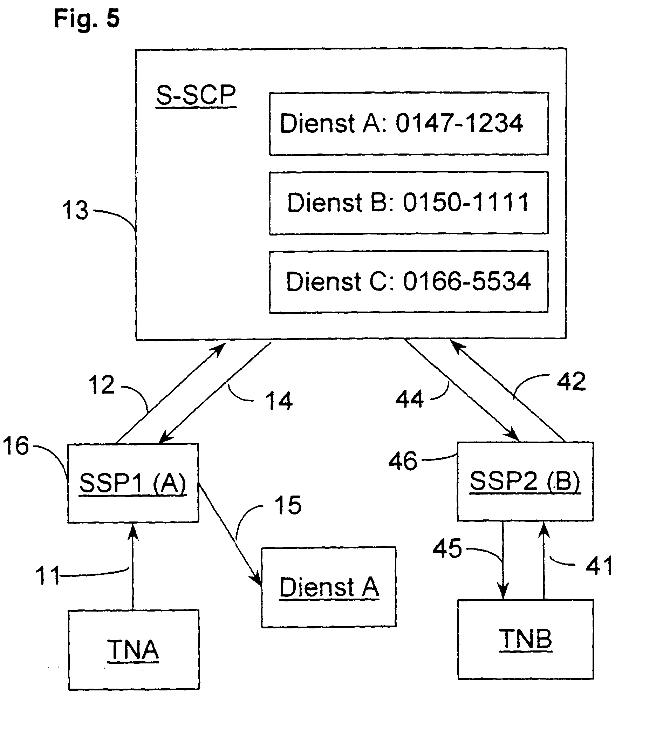

Figur 5 zeigt nun die Behandlung des oben geschilderten Problemfalles mit dem erfindungsgemäßen Verfahren.
Auf der linken Seite zum Vergleich wieder ein herkömmlicher Dienste-Aufruf ohne Kollision verschiedener Netzbetreiber. Die Bezugszeichen 11 bis 16 entsprechen denen der Figuren 1 mit 4.
Der Teilnehmer TNB wählt wiederum den Dienst A: 0147-1234 des Netzbetreibers A, allerdings über das Dienste-Vermittlungs-Netzelement SSP2(B) des Netzbetreibers B, 41. Der Diensteaufruf wird an das Steuerungs-Netzelement S-SCP des Shared IN Systems weitergeleitet, 42.
Der S-SCP ermittelt nun wiederum den Dienst A: 0147-1234 des Netzbetreibers A. Nun überprüft aber der S-SCP außerdem, zu welchem Netzbetreiber B das Dienst-Vermittlungs-Netzelement SSP2(B) gehört und vergleicht, ob es sich um den selben Netzbetreiber handelt. Diese Überprüfung kann geschehen durch einen Vergleich der SSP2(B) Adresse mit einer Liste, also entweder: steht die Adresse auf der Liste der Dienst-Vermittlungs-Netzelemente des Netzbetreibers A, oder welchem Netzbetreiber ist das Dienst-Vermittlungs-Netzelement SSP2(B) zugeordnet. Eine andere Möglichkeit wäre es, eine Netzbetreiber-Kennung explizit in dem Dienste-Aufruf mit zu übergeben. Wenn festgestellt wird, daß keine Übereinstimmung vorhanden ist, so wird von dem IN System ein Fraud-Record geschrieben. Die Ausführung des Dienstes wird nicht ermöglicht, der SSP2(B) wird über das Ergebnis benachrichtigt, 44, der dann seinerseits entsprechende Aktionen durchführt. Dies kann ein Abbruch der Verbindung (Release, 45) sein, oder eine Ansage mit dem Hinweis, daß dieser Dienst nicht zur Verfügung steht, oder welcher Netzbetreiber diesen Dienst anbietet oder ähnliches.

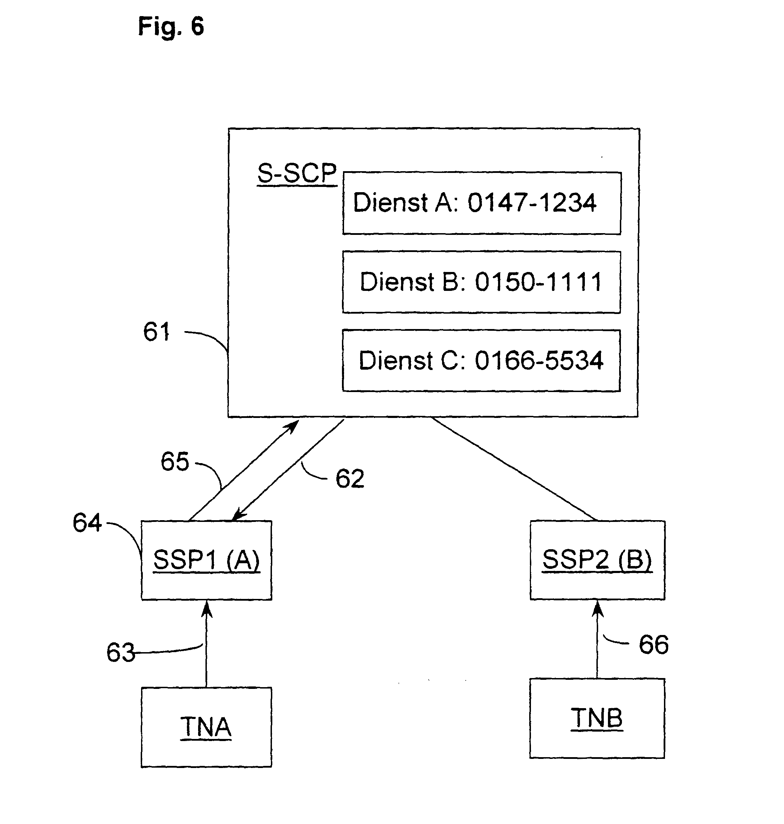

Figur 6 schließlich stellt noch diejenigen Dienste dar, bei denen durch eine Initialisierungsnachricht der Dienst erst ermöglicht wird. Darunter fällt zum Beispiel der Dienst ,Televoting' (auch ,Service Filtering' genannt), also das Zählen von Anrufen auf einer bestimmten Nummer in einem bestimmten Zeitraum. Dieses wird in den letzten Jahren gerne bei Fernsehsendungen angewendet, wo der Fernsehzuschauer über Alternativen durch Wählen unterschiedlicher Telefonnummern abstimmen kann. Diese Anrufe werden jedoch nicht von dem Dienste-Vermittlungs-Netzelement verbunden, sondern lediglich gezählt und nach Abspielen einer kurzen Ansage wieder abgebrochen.

Der S-SCP erhält vom Operator des IN Systems (etwa über das SMS) eine Aufforderung zur Einrichtung des oben beschriebenen Dienstes. Dieser soll aber nur für Teilnehmer des Netzes von Netzbetreiber A zugänglich sein. So schickt der S-SCP die Initialisierungsnachricht 62 (Activate Service Filtering) nur an Dienste-Vermittlungs-Netzelemente des Netzbetreibers A. Hierbei ist es vorteilhaft, wenn der S-SCP Listen gespeichert hat, mit einer Zuordnung der SCP-Adressen zu den Netzbetreibern.
Ruft nun der Teilnehmer TNA des Netzbetreibers A den Dienst auf, 63, so wird sein Anruf wie oben beschrieben gezählt und das Ergebnis zu einem geeigneten Zeitpunkt an den S-SCP weiter gemeldet, 65.
Versucht jedoch ein Teilnehmer TNB bei einem Dienst-Vermittlungs-Netzelement SSP2(B), welches nicht dem Netzbetreiber A gehört, diesen Dienstaufruf, 66, so wird sein Anruf nicht gezählt und die Anzahl dieser fehlgeleiteten Anrufe wird nicht an den S-SCP weitergemeldet. Es ist möglich, daß er eine entsprechende Ansage eingespielt bekommt oder der Anruf umgeleitet wird, solcherart wie in Figur 3 beschrieben. Das für Televoting beschriebene Vorgehen kann auch für das sogenannte Call Gapping, also die Reduzierung der durchzustellenden Dienst-Aufrufe, verwendet werden. Auch hier muß nach einer entsprechenden Berechnung die Initialisierungsnachricht zu den Dienst-Vermittlungs-Netzelementen des betroffenen Netzbetreibers gesendet werden.

### Abkürzungsverzeichnis

- BCC: Billing and Customer Care
- CC: City Carrier
- CS: Capability Set
- CSC: Customer Service Center
- IN: Intelligentes Netz
- ITU: International Telecommunication Union
- SCE: Service Creation Environment
- SCP: Service Control Point
- SM: Service Manager
- SMP: Service Management Point
- SS7: Signalling System #7
- S-SCP: Shared SCP
- SSP: Service Switching Point
- TN: Teilnehmer
- VST: Vermittlungsstelle

### Literaturverzeichnis

Q.1211
   ITU-T, General Recommendations on Telephone Switching and Signalling, Intelligent Network
   Introduction to Intelligent Network Capability Set 1, 03/93
Q.1214
   Intelligent Network
   Distributed Functional Plane for Intelligent Network CS-1, 10/95

## Patentansprüche

1. Verfahren zur Steuerung von Telekommunikationsdiensten in einem Telekommunikationsnetz, welches von mindestens zwei Netzbetreibern (A, B) betrieben wird und aus Netzelementen besteht, wobei
- in dem Telekommunikationsnetz Netzelemente zur Dienstevermittlung (SSP) enthalten sind, die einem der Netzbetreiber eindeutig zugeordnet sind, und
- jeder angebotene Telekommunikationsdienst mindestens einem der Netzbetreiber eindeutig zugeordnet ist, und
- mindestens ein Netzelement zur Steuerung (SCP) der Telekommunikationsdienste vorhanden ist, und
- von dem steuernde Netzelement überprüft wird, ob ein dienste-vermittelndes Netzelement (SSP) dem selben Netzbetreiber zugeordnet ist wie ein Telekommunikationsdienst, welcher über dieses Netzelement aufgerufen wird, und
- weitere Aktionen zur Ausführung des aufgerufenen Telekommunkationsdienstes in Abhängigkeit von dem Ergebnis der Überprüfung durchgeführt werden.

2. Verfahren nach Patentanspruch 1,
**dadurch gekennzeichnet, daß**
das Steuerungs-Netzelement (SCP) Informationen über die Zuordnung von Dienste-Vermittlungs-Netzelementen (SSP) zu Netzbetreibern gespeichert hat.

3. Verfahren nach Patentanspruch 1,
**dadurch gekennzeichnet, daß**
das Steuerungs-Netzelement (SCP) Informationen über die Zuordnung von Dienste-Vermittlunas-Netzelementen (SSP) zu Netzbetreibern aus der Diensteanforderung ermittelt.

4. Verfahren nach einem der vorherigen Patentansprüche, wobei
- von einem Teilnehmer des Telekommunikationsnetzes eine Diensteanforderung an ein Dienste-Vermittlungs-Netzelement (SSP) eines Netzbetreibers gesendet wird, und
- das Dienste-Vermittlungs-Netzelement (SSP) die Diensteanforderung an das Steuerungs-Netzelement (SCP) übermittelt,
**dadurch gekennzeichnet, daß**
- das Steuerungs-Netzelement (SCP) überprüft, welchem ersten Netzbetreiber (A) das absendende Dienste-Vermittlungs-Netzelement (SSP) zugeordnet ist und welchem zweiten Netzbetreiber (B) der angeforderte Dienst zugeordnet ist, und
- wenn die Überprüfung ergibt, daß der erste Netzbetreiber (A) von dem zweiten Netzbetreiber (B) verschieden ist,
- dann der Aufruf des Telekommunikationsdienstes abgewiesen wird.

5. Verfahren nach einem der Patentansprüche 1 oder 2, wobei bei Aktivierung eines Telekommunikationsdienstes von dem Steuerungs-Netzelement (SCP) eine Initialisierungsnachricht an Dienste-Vermittlungs-Netzelemente (SSP) gesendet wird,
**dadurch gekennzeichnet, daß** die Initialisierungsnachricht nur an diejenigen Dienste-Vermittlungs-Netzelemente (SSP) gesendet wird, die dem/den den Telekommunikationsdienst anbietenden Netzbetreiber/n zugeordnet sind.

6. Verfahren nach Patentanspruch 5,
**dadurch gekennzeichnet, daß**
die Dienste-Vermittlungs-Netzelemente (SSP), die eine solche Initialisierungsnachricht erhalten haben, die Anzahl der eingegangenen Diensteaufrufe zählen (Televoting, Service Filtering).

7. Verfahren nach Patentanspruch 5,
**dadurch gekennzeichnet, daß** Berechnungen über die Auslastung der einzelnen Telekommunikations-Dienste angestellt werden
**dadurch gekennzeichnet, daß** diese Berechnungen Netzbetreiber-abhängig durchgeführt werden.

8. Verfahren nach Patentanspruch 7,
**dadurch gekennzeichnet, daß** die Dienste-Vermittlungs-Netzelemente (SSP), die eine solche Initialisierungsnachricht erhalten haben, nur noch einen festgelegten Anteil der Diensteaufrufe zulassen (Call Gapping).

## Claims

1. Method for controlling telecommunication services in a telecommunication network, which is operated by at least two network operators (A, B) and comprises network elements,
- service switching points (SSP) being contained in the telecommunication network, which are assigned uniquely to one of the network operators, and
- each telecommunication service offered being assigned uniquely to at least one of the network operators, and
- at least one network element being present to control (SCP) the telecommunication services, and
- it being verified by the controlling network element, whether a service switching point (SSP) is assigned to the same network operator as a telecommunication service, which is called via said network element, and
- further actions to execute the called telecommunication service being implemented as a function of the result of the verification.

2. Method according to Claim 1,
**characterised in that** the service control point (SCP) has stored information about the assignment of service switching points (SSP) to network operators.

3. Method according to Claim 1,
**characterised in that** the service control point (SCP) determines information about the assignment of service switching points (SSP) to network operators from the service request.

4. Method according to one of the preceding Claims,
- a service request being sent by a user of the telecommunication network to a service switching point (SSP) of a network operator, and
- the service switching point (SSP) forwarding the service request to the service control point (SCP),
**characterised in that**
- the service control point (SCP) verifies to which first network operator (A) the sending service switching point (SSP) is assigned and to which second network operator (B) the requested service is assigned, and
- if the result of the verification shows that the first network operator (A) is different from the second network operator (B),
- the call for the telecommunication service is rejected.

5. Method according to one of Claims 1 or 2, an initialisation message being sent by the service control point (SCP) to service switching points (SSP) during activation of a telecommunication service
**characterised in that**
the initialisation message is only sent to the service switching points (SSP), which are assigned to the network operator(s) providing the telecommunication service.

6. Method according to Claim 5,
**characterised in that** the service switching points (SSP), which have received such an initialisation message, count the number of service calls received (televoting, service filtering).

7. Method according to Claim 5,
**characterised in that** calculations are made of the utilization of the individual telecommunication services,
**characterised in that** these calculations are implemented as a function of the network operator.

8. Method according to Claim 7,
**characterized in that** the service switching points (SSP), which have received such an initialisation message, only permit a specified proportion of the service calls (call gapping).

## Revendications

1. Procédé pour la commande de services de télécommunication dans un réseau de télécommunication, qui est exploité par au moins deux exploitants de réseau (A, B) et se compose d'éléments de réseau, dans lequel
- des éléments de réseau pour la commutation de services (SSP), qui sont attribués clairement à l'un des exploitants de réseau, sont inclus dans le réseau de télécommunication, et
- chaque service de télécommunication proposé est attribué clairement à au moins l'un des exploitants de réseau, et
- au moins un élément de réseau pour la commande (SCP) des services de télécommunication est présent, et
- l'élément de réseau qui commande vérifie si un élément de réseau de commutation de service (SSP) est attribué au même exploitant de réseau qu'un service de télécommunication qui est appelé par cet élément de réseau, et
- d'autres actions pour l'exécution du service de télécommunication appelé sont effectuées en fonction du résultat du contrôle.

2. Procédé selon la revendication 1,
**caractérisé en ce que**,
l'élément de réseau de commande (SCP) a stocké des informations sur l'attribution d'éléments de réseau de commutation de services (SSP) à des exploitants de réseau.

3. Procédé selon la revendication 1,
**caractérisé en ce que**,
l'élément de réseau de commande (SCP) détermine des informations relatives à l'attribution d'éléments de réseau de commutation de services (SSP) aux exploitants de réseau à partir de la demande de services.

4. Procédé selon l'une quelconque des revendications précédentes, dans lequel
- un abonné du réseau de télécommunication envoie une demande de services à un élément de réseau de commutation de services (SSP) d'un exploitant de réseau, et
- l'élément de réseau de commutation de services (SSP) transmet la demande de services à l'élément de réseau de commande (SCP),
**caractérisé en ce que**
- l'élément de réseau de commande (SCP) vérifie à quel premier exploitant de réseau (A) est attribué l'élément de réseau de commutation de services (SSP) expéditeur et à quel second exploitant de réseau (B) est attribué le service demandé, et
- si la vérification montre que le premier exploitant de réseau (A) est différent du second exploitant de réseau (B),
- alors l'appel du réseau de télécommunication est refusé.

5. Procédé selon l'une quelconque des revendications 1 ou 2, dans lequel un message d'initialisation est envoyé par l'élément de réseau de commande (SCP) à des éléments de réseau de commutation de service (SSP) en cas d'activation d'un service de télécommunication,
**caractérisé en ce que**
le message d'initialisation n'est envoyé qu'aux éléments de réseau de commutation de services (SSP) qui sont attribués à l'exploitant/aux exploitants de réseau offrant le réseau de service de télécommunication.

6. Procédé selon la revendication 5,
**caractérisé en ce que**
les éléments de réseau de commutation de services (SSP), qui ont reçu un tel message d'initialisation, comptent le nombre des appels de services entrés (Televoting, Service Filtering).

7. Procédé selon la revendication 5,
**caractérisé en ce que**
des calculs sont réalisés à propos de l'utilisation maximale des différents services de télécommunication,
**caractérisé en ce que**
ces calculs sont effectués en fonction de l'exploitant de réseau.

8. Procédé selon la revendication 7,
**caractérisé en ce que**
les éléments de réseau de commutation de services (SSP), qui ont reçu un tel message d'initialisation, n'autorisent plus qu'une fraction définie des appels de service (Call Gapping).
